## Europäisches Patentamt
## European Patent Office
## Office européen des brevets

(19)

(11) Veröffentlichungsnummer: **0 037 886**
**B1**

(12)

# EUROPÄISCHE PATENTSCHRIFT

(45) Veröffentlichungstag der Patentschrift:
29.05.85

(51) Int. Cl.⁴: **B 01 D 17/02**

(21) Anmeldenummer: **81101179.0**

(22) Anmeldetag: **22.12.80**

(60) Veröffentlichungsnummer der früheren Anmeldung nach Art. 76 EPÜ:

(54) **Abscheider für Leichtflüssigkeiten.**

(30) Priorität: **14.04.80 DE 3014204**
**23.06.80 DE 3023384**

(43) Veröffentlichungstag der Anmeldung:
**21.10.81 Patentblatt 81/42**

(45) Bekanntmachung des Hinweises auf die Patenterteilung:
**29.05.85 Patentblatt 85/22**

(84) Benannte Vertragsstaaten:
**AT BE CH DE FR GB IT LI LU NL SE**

(56) Entgegenhaltungen:
**EP - A - 0 016 517**
**DE - A - 1 038 683**
**DE - A - 2 201 273**
**DE - A - 2 610 773**
**DE - A - 2 853 725**
**DE - C - 586 728**
**GB - A - 1 234 022**
**US - A - 2 232 709**
**US - A - 3 862 040**

(73) Patentinhaber: **Hammerschmitt, Nikolaus, Kölner Strasse 138, D-5350 Euskirchen (DE)**

(72) Erfinder: **Hammerschmitt, Nikolaus, Kölner Strasse 138, D-5350 Euskirchen (DE)**

(74) Vertreter: **Dipl.-Ing. H. Hauck Dipl.-Phys. W. Schmitz Dipl.-Ing. E. Graalfs Dipl.-Ing. W. Wehnert Dr.-Ing. W. Döring, Kaiser-Wilhelm-Ring 41, D-4000 Düsseldorf 11 (DE)**

BUNDESDRUCKEREI BERLIN

**Beschreibung**

Die Erfindung betrifft eine Vorrichtung zum kontinuierlichen Trennen der Komponenten eines Flüssigkeitsgemisches unterschiedlicher spezifischer Gewichte nach dem Oberbegriff des Patentanspruchs 1.

Eine Vorrichtung dieser Art ist aus der FR-E-86 277 bekannt. Bei dieser Vorrichtung besitzt der Leichtflüssigkeitssammelraum einen sehr großen Querschnitt, während die um diesen Raum herum angeordnete zweite Abscheidekammer seitlich davon nur einen äußerst geringen Querschnitt aufweist. Diese Anordnung hat zur Folge, daß sich im Leichtflüssigkeitssammelraum nur eine Ölsäule mit geringer Höhe ausbildet, so daß ohne weiteres bei großen Zulaufschwankungen der Schwerflüssigkeitsspiegel im Sammelraum den Ölablauf erreichen kann, zumal dieser als Überlauf ausgebildet ist. Ferner befindet sich bei dieser bekannten Vorrichtung der Schwerflüssigkeitsablauf aus der zweiten Kammer genau unterhalb des Überganges von der ersten Kammer in die zweite Kammer, so daß dadurch auch ohne weiteres Leichtflüssigkeitsteilchen mit in den Schwerflüssigkeitsablauf geführt werden können.

Der Erfindung liegt die Aufgabe zugrunde, eine Vorrichtung der angegebenen Art zu schaffen, bei der selbst bei großen Zulaufschwankungen keine Schwerflüssigkeitsteile in den Leichtflüssigkeitsablauf und keine Leichtflüssigkeitsteile in den Schwerflüssigkeitsablauf gelangen können. Diese Aufgabe wird erfindungsgemäß durch eine Vorrichtung mit den kennzeichnenden Merkmalen des Patentanspruchs 1 gelöst.

Die erfindungsgemäße Lösung basiert zum einen darauf, daß zwischen dem Schwerflüssigkeitsspiegel und dem Leichtflüssigkeitsablauf eine möglichst hohe Leichtflüssigkeitssäule (im Leichtflüssigkeitssammelraum) aufgebaut wird, und zum anderen darauf, daß der Schwerflüssigkeitsablauf mit möglichst großem Abstand von der ersten Abscheidekammer angeordnet ist.

Es ist bekannt, daß sich beispielsweise bei Öl (Dichte 0,85) innerhalb einer Kammer 15% der Ölsäule über und 85% unter dem Schwerflüssigkeitsspiegel außerhalb der Kammer aufbauen. Diese Erkenntnis macht sich die Erfindung zunutze, indem sie einen Ölsammelraum mit möglichst geringem Querschnitt gegenüber dem Querschnitt der äußeren Kammer vorsieht, so daß der unter der Ölsäule befindliche Schwerflüssigkeitsspiegel eine relativ große Strecke durchwandern muß, um bis zum Ölablauf zu gelangen. Auf diese Weise wird vermieden, daß bei großen Schwankungen im Zulauf Schwerflüssigkeit sehr rasch in den Leichtflüssigkeitsablauf eindringen kann.

Eine Querschnittsverengung des Leichtflüssigkeitssammelraumes in Aufwärtsrichtung ist erwünscht, um in den als aufwärts verlaufendes Rohr ausgebildeten Leichtflüssigkeitsablauf überzuleiten. Mit anderen Worten, der Leichtflüssigkeitsablauf ist nicht als direkter Überlauf ausgebildet, sondern erstreckt sich vom Sammelraum aus erst noch aufwärts, um die über dem äußeren Schwerflüssigkeitsspiegel befindlichen 15% der Ölsäule aufnehmen zu können.

Bei der erfindungsgemäßen Lösung ist ferner der Leichtflüssigkeitssammelraum nach unten hin so ausreichend bemessen, daß der Leichtflüssigkeitsspiegel nicht in die benachbarten Räume, beispielsweise das Einmündungsrohr, eindringen kann. Der Raum ist ausreichend groß, um die 85% der Leichtflüssigkeitssäule aufnehmen zu können.

Weiterbildungen des Erfindungsgegenstandes gehen aus den Unteransprüchen hervor.

Die Erfindung wird nachfolgend anhand von Ausführungsbeispielen in Verbindung mit der Zeichnung im einzelnen erläutert. Es zeigen:

Fig. 1 einen Vertikalschnitt durch eine erste Ausführungsform eines Abscheiders;

Fig. 2 einen Horizontalschnitt durch die in Fig. 1 dargestellte Ausführungsform;

Fig. 3 einen Vertikalschnitt durch eine zweite Ausführungsform eines Abscheiders entlang Linie B-B in Fig. 4;

Fig. 4 eine Horizontalschnitt durch den in Fig. 3 dargestellten Abscheider entlang Linie A-A in Fig. 3;

Fig. 5 einen Vertikalschnitt durch eine dritte Ausführungsform eines Abscheiders;

Fig. 6 eine Horizontalschnitt durch die in Fig. 5 gezeigte Ausführungsform;

Fig. 7 einen Vertikalschnitt durch eine vierte Ausführungsform eines Abscheiders entlang Linie B-B in Fig. 8;

Fig. 8 einen Horizontalschnitt durch den Abscheider der Fig. 7 entlang Linie A-A in Fig. 7;

Fig. 9 einen Vertikalschnitt durch eine fünfte Ausführungsform eines Abscheiders; und

Fig. 10 einen Horizontalschnitt durch die in Fig. 9 dargestellte fünfte Ausführungsform.

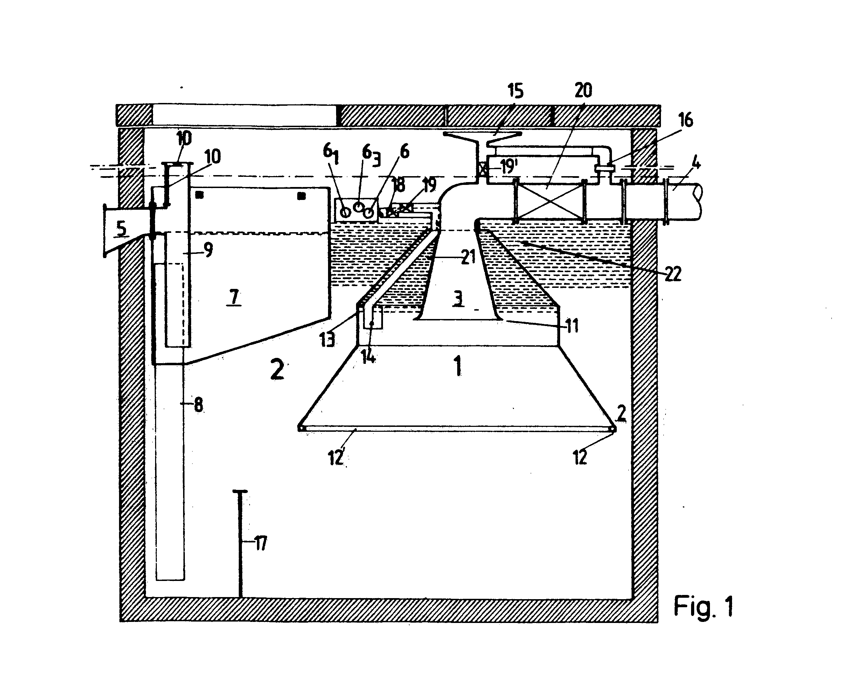

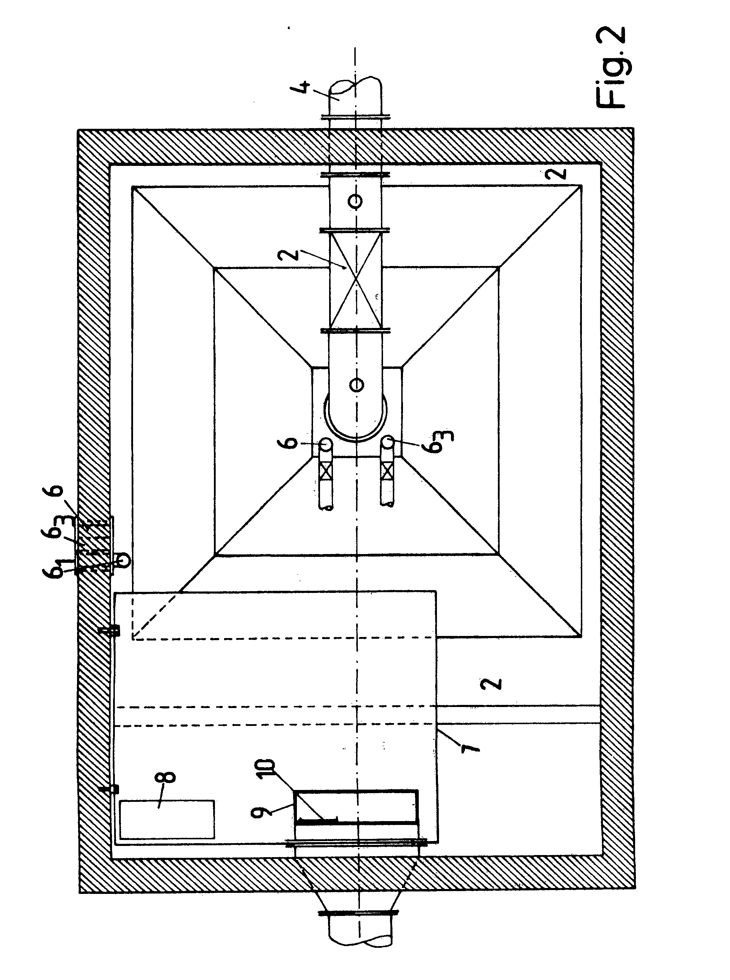

In den Fig. 1 und 2 ist eine erste Ausführungsform einer Vorrichtung zum kontinuierlichen Trennen der Komponenten eines Flüssigkeitsgemisches unterschiedlicher spezifischer Gewichte (Leichtflüssigkeitsabscheider) dargestellt. Der Abscheider umfaßt zwei Abscheidekammern 1, 2, die durch eine Abscheiderglocke 12 voneinander getrennt sind. In die Abscheiderglocke 12 erstreckt sich von oben ein sich nach unten konisch erweiterndes Flüssigkeitseinlaufrohr 3, über das das Flüssigkeitsgemisch in den Abscheider eingeführt wird.

Das Flüssigkeitsgemisch tritt aus dem Einlaufrohr 3 aus und mündet in einen Raum mit großem Durchflußquerschnitt ein. Durch die dabei auftretende Geschwindigkeitsverminderung können die Leichtflüssigkeitsteilchen in den außerhalb des Einlaufrohres 3 befindlichen Leichtflüssigkeitssammelraum 21 aufsteigen und gelangen von dort zu dem Leichtflüssigkeitsablauf 6. Die Schwerflüssigkeit tritt aus der Abscheiderglocke 12 aus und gelangt in die zweite Abscheidekammer 2, aus der sie über ein Tauchrohr 8 entfernt wird.

Durch das Tauchrohr 8 gelangt die Schwerflüssigkeit (Wasser) von der Sohle des Abscheiders in den Restölabscheidebehälter 7. An der Oberfläche oder dem bereits vorhandenen Ölfilm verbinden sich die noch im Wasser enthaltenen Ölteilchen und werden dadurch über Wasser gehalten. Von der Sohle des Restölabscheidebehälters 7 wird das gereinigte Wasser über ein T-förmiges Tauchrohr 9 mit rechteckigem Querschnitt und einem Wasserablauf 5 dem Abwasserkanal zugeführt. Das Übergangsstück von einem rechteckigen auf ein genormtes rundes Kanalrohr ist zum Kanal hin stark abgesenkt. Hierdurch wird der Abfluß beschleunigt, der entstehende Sog mildert die Schwankungen.

Am Deckel des Tauchrohrs 9 ist eine Rückschlagklappe 10 angeordnet, wodurch ein Absaugen des Wassers — mit evtl. Ölbeständen — im Restölabscheider 7 verhindert wird.

Die niedrige Trennwand 17 vor dem Tauchrohr dient dazu, den Schlamm vom Abfluß fernzuhalten (Schlammtrennwand).

Ein Sicherheitsablauf $6_3$ bestimmt den vorgegebenen niedrigen Ölstand. Ist der Ölablauf aus irgendeinem Grund unterbrochen, sinkt der Öltiefstand in der Glocke. Das Öl unterläuft die Überlaufkante im Einlauf 14 und gelangt über den höher liegenden Sicherheitsablauf $6_3$ in den Reservetank. Auf dem Weg zum Reservetank wird von dem abfließenden Öl — mittels Warnanlage — Ölalarm ausgelöst; ohne Unterbrechung des Betriebes kann der Schaden behoben werden. Bei Wartungsarbeiten wird das Absperrventil außerhalb des Abscheiders am Wasserablauf 5 geschlossen (evtl. Umlegen der Umklappsperre) und soviel Wasser zugeführt, bis die Ölschicht inner- und außerhalb der Glocke abgelassen ist. Dann werden die Ventile 18, 19 geschlossen und Restölbestände durch weiteres Anheben des Wasserspiegels mit Leitungswasser über den Absaugtrichter 15, der mit einem Absperrventil 19' versehen ist, und daß Rücklaufrohr 16 in den Zulauf hinter das vorher geschlossene Absperrventil 20 geleitet. Nach Beendigung der Wartungsarbeiten wird diese ölverschmutzte Flüssigkeit erneut dem Abscheider zugeführt.

Die im Abstand von den Außenwänden des Abscheiders auf Konsolen (die nicht gezeigt sind) ruhende Abscheiderglocke 12 dient als Hauptabscheider.

Durch die trichterartige Aufweitung des Einlaufrohrs 3 wird die Strömungsgeschwindigkeit abgeschwächt, ist aber stärker als die Auftriebsgeschwindigkeit des Öls.

Am unteren Rand 11 des trichterartigen Einlaufrohres 3 wird durch den sehr großen Glockendurchmesser die Strömungsgeschwindigkeit so weit herabgesetzt, daß das Öl aufsteigen kann. Im Bereich der Zulaufströmung wird der Aufstieg seitlich abgelenkt, so daß das Öl in der ruhigen Zone rings um das Einlaufrohr 3 aufsteigen kann.

Einen weiteren Geschwindigkeitsstop bewirkt der untere Rand der Abscheiderglocke 12. An dieser Stelle steigen noch weitere verhältnismäßig leichte Ölteilchen an der Innenwandung der Glocke nach oben in den Leichtflüssigkeitssammelraum 21. Spezifisch etwas schwerere Mikroteilchen schweben jedoch in der vollkommen ruhigen Zone langsam in der zweiten Abscheidekammer 2 nach oben. Dort sammelt sich längerfristig bei 22 eine Ölschicht an, die nach Erreichen einer bestimmten Schichtdicke in einen Altöltank abgeführt wird. Durch die pyramidenartige Ausführung des Leichtflüssigkeitssammelraumes 21 werden unvermeidbare Schwankungen hinsichtlich des Öltiefststandes 13 größtenteils neutralisiert.

Nur bei langfristig geringem Durchfluß kann der Öltiefstand 13 erreicht werden.

Der Leichtflüssigkeitsablauf 6 ist zweistufig ausgebildet und weist eine zweite Stufe $6_1$ auf.

Die Abscheiderglocke 12 ist am unteren Rand mit einer Öltropfrinne 12' versehen.

Bei dem Abscheider der Fig. 1 und 2 handelt es sich um einen kombinierten Abscheider, d. h., Schlamm- und Ölabscheider in einem Aggregat.

Die nachfolgend beschriebenen Abscheider machen die Vorschaltung eines Schlammfangs zwingend notwendig, entsprechen also den derzeitigen Bestimmungen.

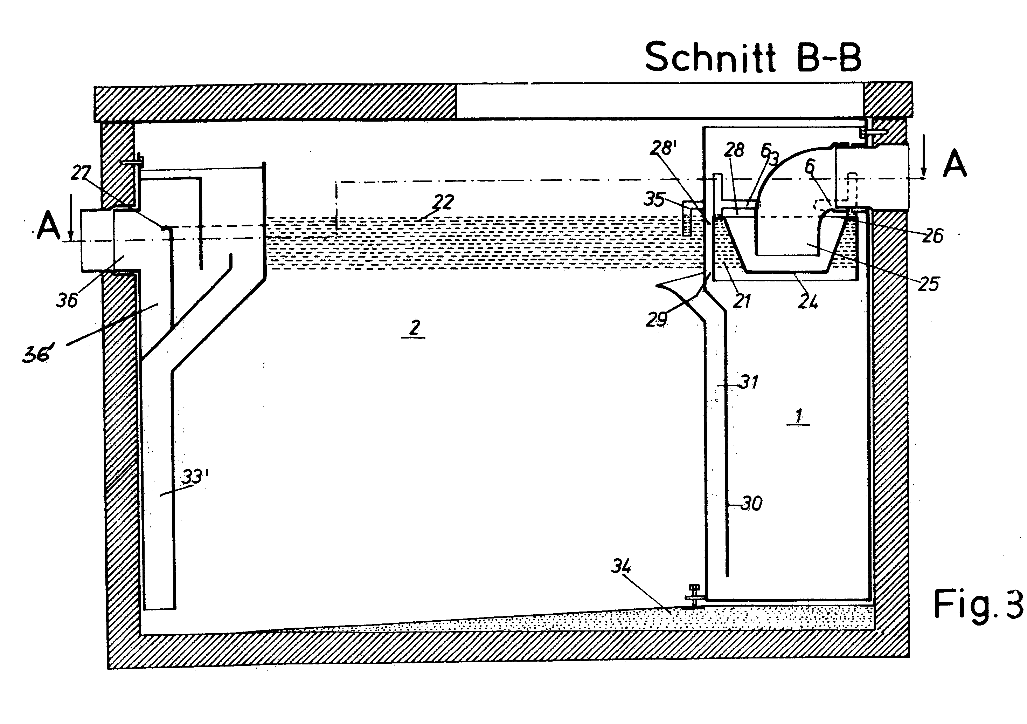

Wie die Ausführungsform der Fig. 1 und 2 ist auch der Abscheider der Fig. 3—4 in 3 Stufen eingeteilt. Im Gegensatz zum Kombi-Abscheider der Fig. 1—2 erfordert dieser jedoch die Vorschaltung eines Schlammfangs.

Die erste Stufe dient als Grob- oder Hauptabscheider, die zweite Stufe als Feinabscheider und die dritte Stufe (falls erforderlich) als Restabscheider.

Die Einbauten können nach Fertigstellung des Hauptkörpers nachträglich eingebracht werden. Bei kleinen Abscheidern aus Stahl können die Einbauteile unter Ausnutzung der Außenwände mit dem Hauptkörper fest verbunden werden.

Um die Einlaufgeschwindigkeit stark herabzusetzen, ist ein doppelwandiges Becken 24 in Trogform vorgesehen, so daß an der Unterseite an vier Seiten durchgehend ein pyramidenartiger Hohlraum entsteht, der als Leichtflüssigkeitssammelraum 21 dient.

Das Becken 24 liegt auf zwei Schienen (die nicht gezeigt sind) und ist nach Drehen oder Abnehmen des Einlaufrohres 25 und Lösen der Ölrohrverschraubung 26 leicht herausnehmbar, wodurch die Wartung erleichtert wird.

Der Wasserablauf an der Schleuse (oder Schleusenanordnung) 27 ist tiefer angelegt als der am Becken 24. Hierdurch entstehen 2 Wasserspiegel-Niveaus, 28-28'.

Der Zulauf der ölverschmutzten Abwässer erfolgt über das Einlaufrohr 25 in das Becken 24 und über die Kanäle 29 an allen vier Seiten des Beckens. Beim Austreten aus diesen Kanälen wird die Geschwindigkeit so stark gedrosselt, daß sich das Öl vom Wasser löst und in der zentralen strömungsfreien Zone nach oben in den pyramidenartigen Leichtflüssigkeitssammelraum 21 unter Verdrängung des Wassers aufsteigt.

Nach Erreichen des gegenüber dem Schwerflüssigkeitsablaufs höher angelegten Leichtflüssigkeitsablaufs 6 fließt das Öl kontinuierlich, je nach Schwankungen auch stoßweise, in einen Öltank außerhalb des Abscheiders ab. Bei der Bestimmung der Höhe des Ölablaufs müssen die Wasserspiegelschwankungen berücksichtigt werden.

Das Wasser hingegen unterläuft die Trennwand 30 und steigt mit erhöhter Geschwindigkeit im Trennwandschacht 31 nach oben, wobei sich die spezifisch schwereren Teilchen mit der Ölschicht in der zweiten Abscheidekammer 2 verbinden und so über Wasser gehalten werden. Vor allem aber befinden sich jetzt diese Mikro-Bestandteile oben und brauchen nicht mehr gegen den Strom nach oben aufzusteigen.

In der zweiten Abscheidekammer 2 erfolgt die Feinabscheidung. Deshalb ist auch diese Stufe so groß bemessen, daß hier die niedrige Fallgeschwindigkeit von 0,25 cm/s bei einem Durchsatz von 6 l/s erreicht wird.

Die abzuscheidenden Flüssigkeiten werden somit in vertikalen und nicht in horizontalen Richtungen bewegt.

Durch die schiefe Ebene am Boden 34 der Abscheidekammer 2 soll ein gleichmäßiges Absetzen des Wassers erreicht werden.

Der Sicherheitsablauf 35 ist (falls erforderlich) so angeordnet, daß mittels eines kurzen Ölrohrkrümmers das Öl in die erste Abscheidekammer zurückgeleitet wird. Die Ölableitung kann aber auch nach außen in den Reservetank erfolgen.

Der Schwerflüssigkeitsablauf erfolgt über das Tauchrohr 33'. Durch das vorgelagerte Ausgleichssammelbecken 36', das durch die Schleuse 27 entsteht, und die Absenkung des Ablaufs 36, der im Querschnitt größer ist als das Einlaufrohr 25, sind die Schwankungen im Wasserspiegel sehr gering.

Die halbrunde Abkantung an der Schleuse 27 erzeugt einen Sog, beschleunigt den Abfluß und trägt somit zur Minderung der Schwankungen bei.

Der Öl-Sicherheitsablauf liegt höher als der Normalablauf. Ist der Öl-Normalablauf behindert, steigt die Ölschicht und fließt aus dem Öl-Sicherheitsablauf in einen Reservetank ab.

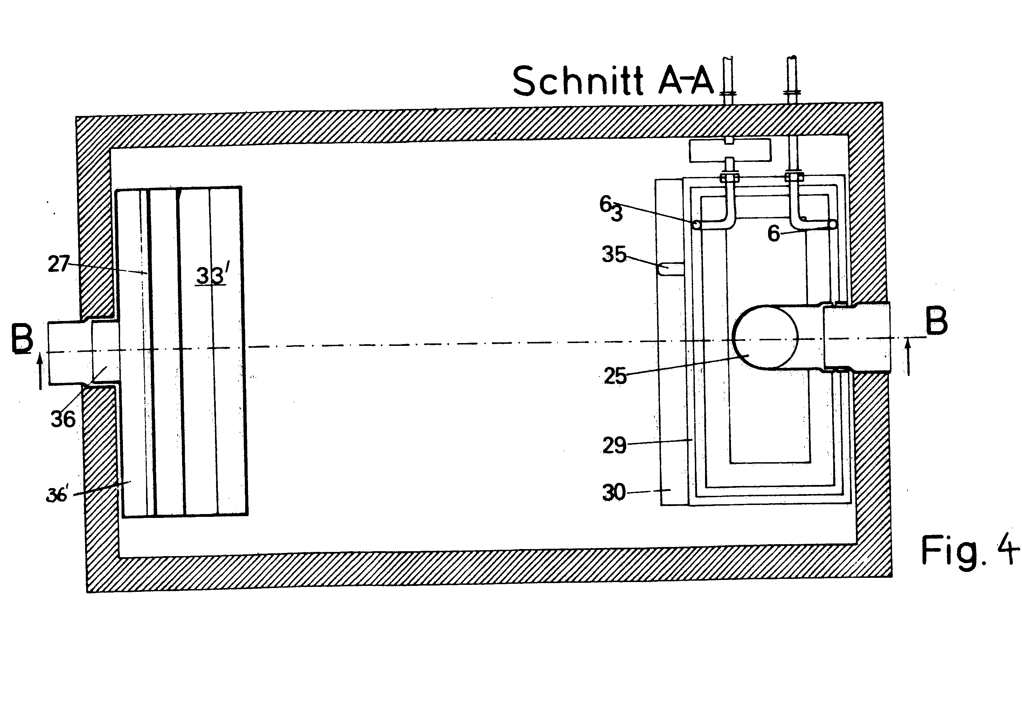

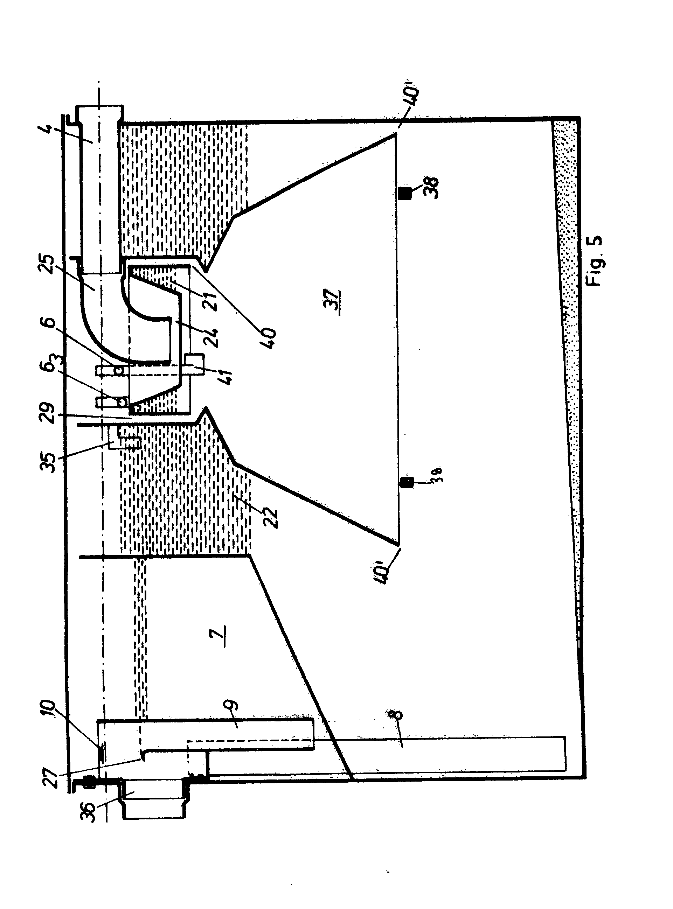

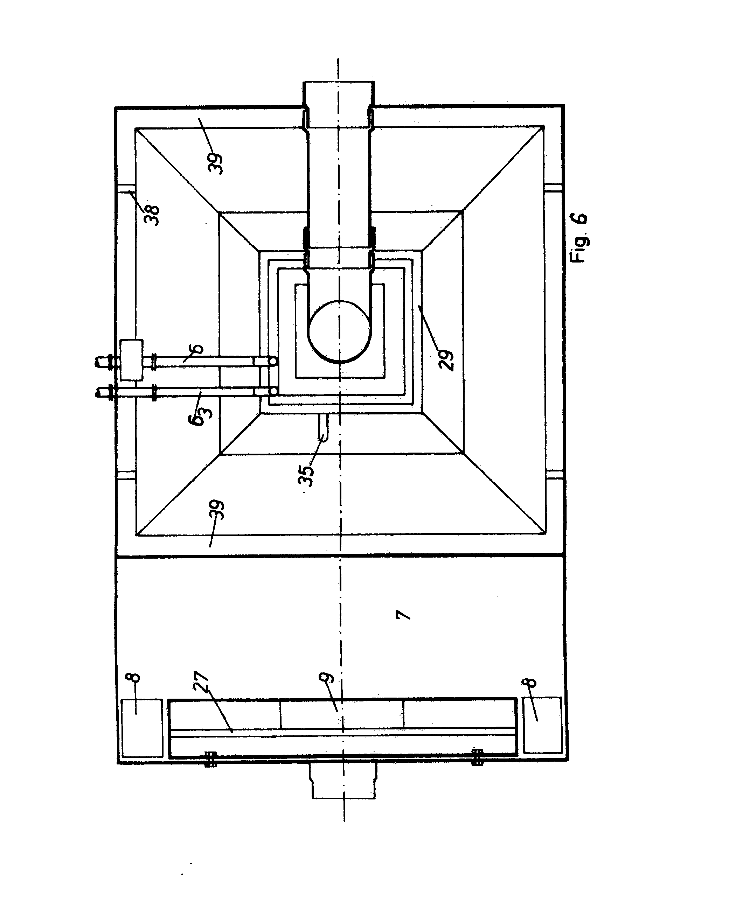

Die Fig. 5 und 6 zeigen ein Ausführungsbeispiel in Stahlausführung. Hierbei kommt als erste Abscheidekammer eine eingetauchte Abscheiderglocke 37 zur Anwendung. Diese ist auf zwei Schienen 38 in einem bestimmten Abstand 40' von den Außenwänden 39 des Behälters gelagert. Für den Einlauf wurde das in den Fig. 3, 4 beschriebene, vierseitige, die Geschwindigkeit drosselnde, trogartige Becken 24 gewählt.

Der Sicherheitsablauf erfolgt hierbei mittels Tauchrohr 41 und funktioniert nach dem gleichen Verfahren, wie bereits in den Fig. 1 und 2 beschrieben.

Die übrigen Teile entsprechen im wesentlichen den der Fig. 1—4. Mit 40 ist eine Einengung der Abscheiderglocke 37 bezeichnet.

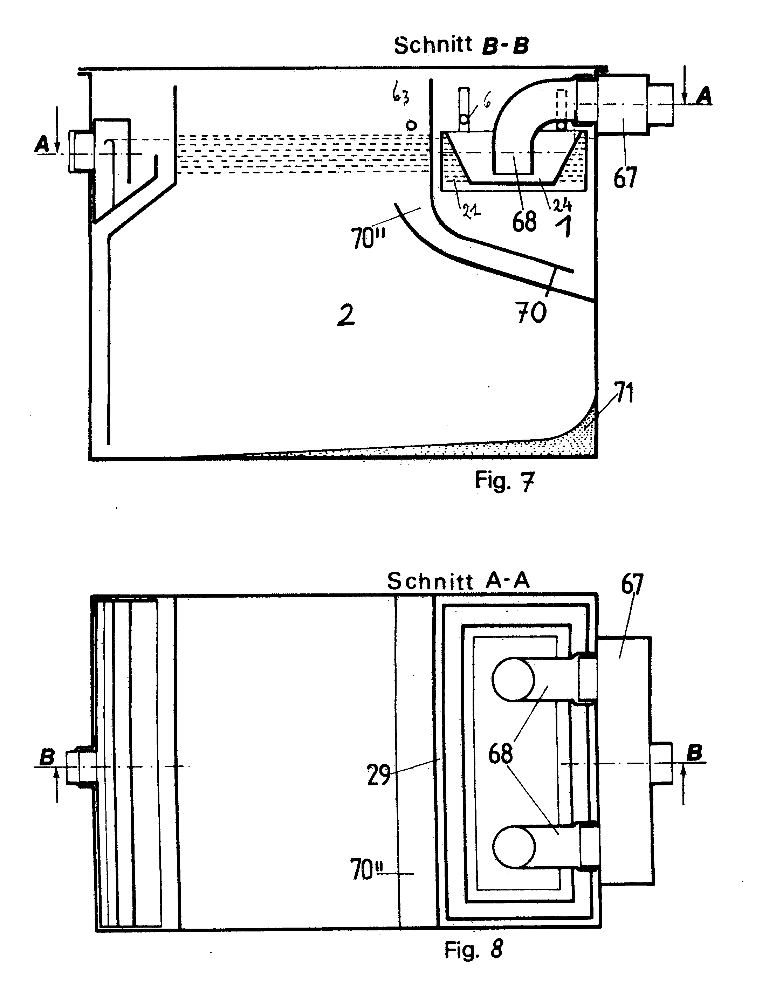

Der in den Fig. 7 und 8 dargestellte Abscheider besitzt eine gebogene Trennwand 70, die den Behälter in die beiden Abscheidekammern unterteilt. An diese Trennwand 70 schließt sich ein Trennwandschacht 70'' an. Der Einlauf wird durch ein Rohr 67 und einen anschließenden Krümmer 68 gebildet, der in ein trogartiges Becken einmündet. Der Boden 71 der zweiten Abscheidekammer ist zum Wasserablauf hin geneigt ausgebildet.

Dieser Abscheider funktioniert wie der Abscheider der Fig. 2 und 3 und ist zusätzlich mit einer dachähnlichen Haube, die der Ableitung des Öls in den Reservetank dient, versehen (nicht gezeigt).

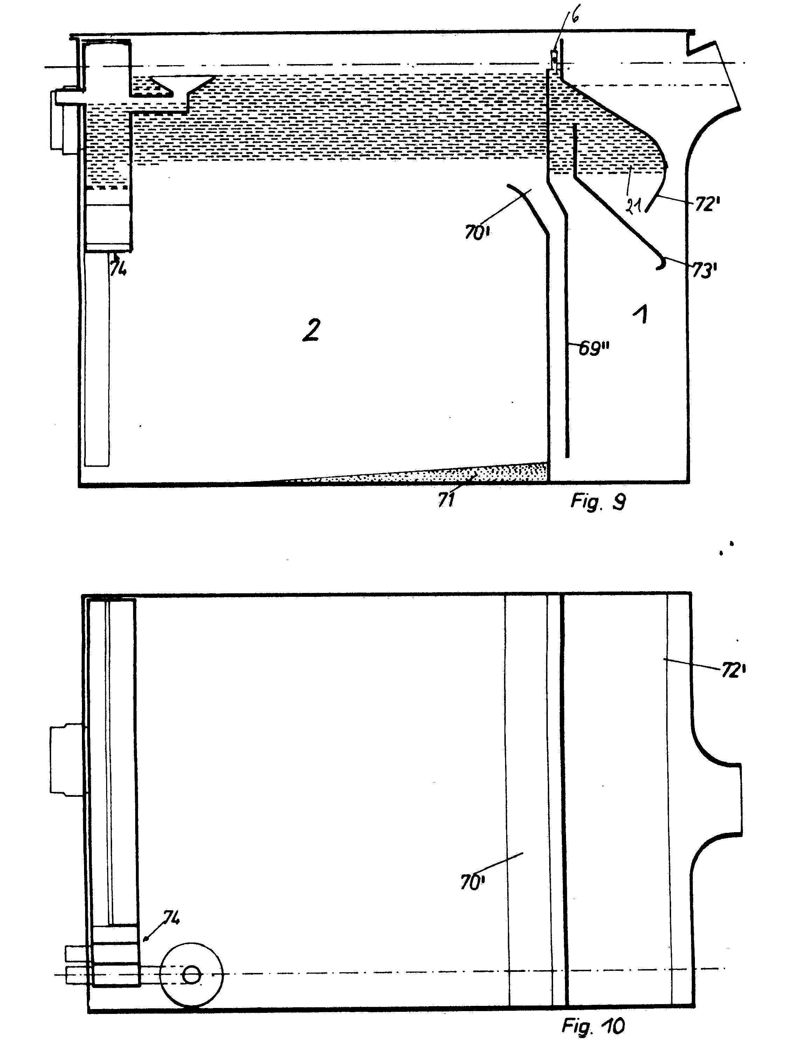

Bei dem in den Fig. 9 und 10 dargestellten Abscheider sind Leitelemente 72', 73' vorgesehen, mittels denen das einströmende Flüssigkeitsgemisch nach unten geführt wird. Hinter den Leitelementen sammeln sich die aufsteigenden Ölpartikel und werden über einen Ölablauf (nicht gezeigt) am oberen Ende abgeführt.

Die beiden Kammern sind durch eine Trennwand 69'' voneinander getrennt, an die sich ein Trennwandschacht 70' anschließt. Der Boden 71 der zweiten Abscheidekammer ist wiederum geneigt ausgebildet.

Im hinteren Teil der zweiten Abscheidekammer ist ein Ölsicherheitsablauf 74 mit Warnanlage vorgesehen.

Ob bei den gezeigten Ausführungsbeispielen ein Schwerflüssigkeitsablauf mit rundem oder rechteckigem Querschnitt, oder ob eine Schleuse verwendet wird, hängt von der Größe des Abscheiders oder vom Ausführungsbeispiel ab. Je nach Kombination kann das eine oder andere zweckmäßiger sein.

Die Schwankungen sind von dem Füllungsgrad der Zu- und Ablaufrohre abhängig. Um diese Wasserspiegelschwankungen bis auf das Unvermeidbare herabzusetzen, werden sie über eine Schleuse in eine Ausgleichskammer geleitet. Je breiter diese Schleuse angelegt ist, desto geringer sind die Schwankungen.

Der Ablaufstutzen ist vorteilhafterweise größer und wesentlich tiefer angelegt, als das Einlaufrohr. Die vermeidbaren Schwankungen liegen jetzt außerhalb des eigentlichen Abscheiders. Jedenfalls sind sie für die Funktion des Abscheiders unschädlich.

Die unvermeidbaren Schwankungen innerhalb des Abscheiders werden jetzt von der Breite der Schleuse bestimmt.

**Patentansprüche**

1. Vorrichtung zum kontinuierlichen Trennen der Komponenten eines Flüssigkeitsgemisches unterschiedlicher spezifischer Gewichte, insbesondere zum Trennen einer Leichtflüssigkeit, wie Öl oder Benzin etc., von einer Schwerflüssigkeit, wie Wasser etc., mit einem Behälter, einer im Behälter angeordneten Trennwand (12, 30, 37, 70, 69''), die den Behälter in eine erste und eine zweite Abscheidekammer (1, 2) unterteilt und eine Verbindung der Kammern im unteren Behälterteil vorsieht, einem Einlauf (4, 25; 67, 68) für das Flüssigkeitsgemisch in die erste Abscheidekammer (1), einem Ablauf (5, 36) für die Schwerflüssigkeit aus der zweiten Abscheidekammer (2) und einem zum Spiegel der Schwerflüssigkeit höher angelegten Ablauf (6) der Leichtflüssigkeit aus der ersten Abscheidekammer (1), wobei die erste Abscheidekammer (1) mindestens eine Leitfläche (3; 24; 72', 73') zur Zuführung des Flüssigkeitsgemisches aufweist, die eine im wesentlichen vertikal nach unten gerichtete Flüssigkeitsströmung bewirkt und in einen Raum mit großem Durchflußquerschnitt einmündet, und wobei auf der vom Flüssigkeitsdurchfluß abgewandten Seite der Leitfläche(n) ein als Leichtflüssigkeitssammelraum (21) dienender strömungsfreier Bereich vorgesehen ist, der den Ablauf (6) für die Leichtflüssigkeit aufweist, dadurch gekennzeichnet, daß der Leichtflüssigkeitssammelraum (21) einen zum Aufbau einer schlanken Leichtflüssigkeitssäule geeigneten, gegenüber der zweiten Abscheidekammer (2) wesentlich verringerten Querschnitt aufweist, der sich in Aufwärtsrichtung verengt und am oberen Ende in den als aufwärts verlaufendes Rohr ausgebildeten Leichtflüssigkeitsablauf (6) übergeht, daß die den Leichtflüssigkeitssammelraum begrenzende Leitfläche (Einlaufrohr 3, Trog 24, Leitelemente 72', 73') bis unter den sich unter Berücksichtigung von maximalen Schwerflüssigkeitsschwankungen einstellenden Leichtflüssigkeitstiefststand geführt ist und daß der Schwerflüssigkeitsablauf als mit wesentlichem horizontalen Abstand zur ersten Abscheidekammer (1) angeordnete Tauchwand (8, 33') ausgebildet ist.

2. Vorrichtung nach Anspruch 1, dadurch gekennzeichnet, daß die Leitfläche durch ein sich nach unten konisch erweiterndes Flüssigkeitseinlaufrohr (3) gebildet ist.

3. Vorrichtung nach Anspruch 2, dadurch gekennzeichnet, daß die Trennwand durch eine Abscheiderglocke (12) gebildet ist, in die das Flüssigkeitseinlaufrohr (3) von oben eingeführt ist.

4. Vorrichtung nach Anspruch 1, dadurch gekennzeichnet, daß die Leitfläche durch ein am Flüssigkeitseinlauf angeordnetes trogartiges, mit doppelten Seitenwänden ausgestattetes, Becken (24) gebildet ist, das in Verbindung mit der Trennwand (30) den verengten Durchflußquerschnitt bildet.

5. Vorrichtung nach Anspruch 1, dadurch gekennzeichnet, daß die Leitfläche durch zwei am Flüssigkeitseinlauf angeordnete, schräg abwärts weisende Leitelemente (72', 73') gebildet ist.

6. Vorrichtung nach Anspruch 1, dadurch gekennzeichnet, daß die Tauchwand als Tauchrohr (8, 33') ausgebildet ist.

7. Vorrichtung nach Anspruch 4, dadurch gekennzeichnet, daß die doppelten Seitenwände des trogartigen Beckens (24) eine vierseitige Schleuse bilden und daß der Leitflüssigkeitssammelraum (21) in dem vierseitig pyramidenartigen Raum zwischen den Seitenwänden vorgesehen ist.

8. Vorrichtung nach Anspruch 1, dadurch gekennzeichnet, daß zwischen der ersten Abscheidekammer (1) und der zweiten Abscheidekammer (2) ein Trennwandschacht (31, 70', 70") vorgesehen ist.

9. Vorrichtung nach Anspruch 1, dadurch gekennzeichnet, daß der Boden (34, 71) der zweiten Abscheidekammer (2) mit starkem Gefälle zum Schwerflüssigkeitsablauf hin ausgebildet ist.

10. Vorrichtung nach Anspruch 3, dadurch gekennzeichnet, daß die Abscheiderglocke (12) am unteren Rand mit einer Öltropfrinne (12') versehen ist.

11. Vorrichtung nach einem der vorangehenden Ansprüche, dadurch gekennzeichnet, daß sie eine dritte Abscheidekammer (Restabscheider 7) aufweist, die mit dem Schwerflüssigkeitsablauf in Verbindung steht, und daß zur Ableitung der Schwerflüssigkeit aus der dritten Abscheidekammer ein Tauchrohr (9) in die Abscheidekammer eingeführt ist.

12. Vorrichtung nach einem der vorangehenden Ansprüche, dadurch gekennzeichnet, daß der Leichtflüssigkeitssammelraum einen Sicherheitsablauf (6₃) aufweist.

13. Vorrichtung nach Anspruch 1, dadurch gekennzeichnet, daß der Schwerflüssigkeitsablauf einen rechteckigen Ablaufquerschnitt aufweist.

14. Vorrichtung nach Anspruch 1, dadurch gekennzeichnet, daß vor dem Schwerflüssigkeitsablauf (36) ein Ausgleichssammelbecken (36') durch eine Schleusenanordnung (27) gebildet ist, indem der breite Überlaufquerschnitt durch die Schleuse in einen tiefer liegenden runden Ablaufquerschnitt umgewandelt ist, daß der Zulauf zur Schleuse über einen Schacht oder ein Rechteckrohr erfolgt und daß die Schleuse zur Beschleunigung der Geschwindigkeit mit einer runden Überlaufabkantung versehen ist.

15. Vorrichtung nach Anspruch 1, dadurch gekennzeichnet, daß vor der Tauchwand des Schwerflüssigkeitsablaufs eine Schlammtrennwand (17) angeordnet ist.

## Claims

1. A device for continuously separating the components of a liquid mixture of different specific weights, especially for separating a light liquid, as for instance oil or gasoline etc., from a heavy liquid, as for instance water etc., said device comprising a container, a partition (12, 30, 37, 70, 69") disposed in said container and separating the same into a first and a second separation chamber (1, 2) and providing a connection of the chambers in the lower container portion, an inlet (4, 25; 67, 68) for the liquid mixture into the first separation chamber (1), an outlet (5, 36) for the heavy liquid from the second separation chamber (2), and an outlet (6) for the light liquid from the first separation chamber (1) disposed higher than the level of the heavy liquid, said first separation chamber (1) having at least one deflecting suface (3; 24; 72', 73') for supplying said liquid mixture, said deflecting surface causing a substantially vertically downwardly directed liquid flow and opening into a space with large sectional area of flow, an area free of flow being provided on the side of the deflecting sufaces opposite to the liquid flow and serving as light liquid collecting chamber (21) which includes the outlet (6) for the light liquid, characterized in that said light liquid collecting chamber (21) has a cross-sectional area suited for the establishment of a slim light liquid column and substantially reduced with respect to the second separation chamber (2), said cross-sectional area narrowing upwardly and changing at the upper end into said light liquid outlet (6) which is formed as upwardly extending tube, in that said deflecting surface (inlet tube 3, trough 24, deflecting members 72', 73') confining said light liquid collecting chamber extends below the lowermost level of the light liquid adjusting with regard to maximum heavy liquid fluctuations, and in that said heavy liquid outlet is formed as a dip wall (8, 8', 33') substantially horizontally spaced from said first separation chamber (1).

2. The device according to claim 1, characterized in that said deflecting surface is defined by a liquid inlet tube (3) conically enlarging downwardly.

3. The device according to claim 1 or 2, characterized in that said partition is defined by a separating bell (12) into which the liquid inlet tube (3) is introduced from above.

4. The device according to claim 1, characterized in that said deflecting surface is defined by a trough-like basin (24) having for instance double side walls and defining the narrowed sectional area of flow in connection with said partition (30).

5. The device according to claim 1, characterized in said said deflecting surface is defined by two deflecting members (72', 73') disposed at the liquid inlet and downwardly inclined.

6. The device according to claim 1, characterized in that, said dip wall is formed as dip tube (8, 33').

7. The device according to claim 4, characterized in that the double side walls of the trough-like basin (24) define a four-sided sluice and said collecting chamber (21) for the light liquid is provided in the four-sided pyramid-like space between said side walls.

8. The device according to claim 1, characterized in that a partition pit (31, 70', 70") is provided between said first separation chamber (1) and said second separation chamber (2).

9. The device according to claim 1, characterized in that the bottom (34, 71) of said second separation chamber (2) is substantially inclined towards the heavy liquid outlet.

10. The device according to claim 3, characterized in that said separation bell (12) has an oil drip gutter (12') at its lower edge.

11. The device according to one of the preceding claims, characterized in that it includes a third separation chamber (residual separator) in connection with said heavy liquid outlet, and in that a dip tube (9) is introduced into the third separation chamber for discharging the heavy liquid from the same.

12. The device according to one of the preceding claims, characterized in that said light liquid collecting chamber includes a security outlet (6₃).

13. The device according to claim 1, characterized in that said heavy liquid outlet has a rectangular cross-section.

14. The device according to claim 1, characterized in that a compensating collection basin (36') is defined by a sluice (27) in front of the heavy liquid outlet (36) by transforming the wide weir cross-section of said sluice into a round outlet cross-section at a lower position, in that said sluice is supplied by a well or a rectangular tube, and in that said sluice is provided with a round weir edge for acceleration of the flow velocity.

15. The device according to claim 1, characterized in that a slurry partition (17) is disposed in front of said dip wall of said heavy liquid outlet.

**Revendications**

1. Dispositif pour la séparation continue des constituants d'un mélange de liquides, de poids spécifiques différents, notamment pour séparer un liquide léger, tel que de l'huile, de l'essence ... etc, d'un liquide lourd, tel que de l'eau ... etc, comportant un récipient, une cloison séparatrice (12, 30, 37, 70, 69"), qui divise le récipient en une première et une seconde chambre de dépôt (1, 2) et permet une communication des chambres dans la partie inférieure du récipient, une entrée (4, 25; 67, 68) pour le mélange de liquides dans la première chambre de dépôt (1), une sortie (5, 36) pour le liquide lourd en provenance de la seconde chambre de dépôt (2) et une sortie (6) du liquide léger hors de la première chambre de dépôt (1), cette sortie étant située plus haut que le niveau du liquide lourd, la première chambre de dépôt (1) présentant au moins une surface directrice (3; 24; 72', 73') pour amener le mélange de liquides, laquelle surface produit un écoulement des liquides, dirigé vers le bas, à peu près verticalement, et débouche dans une chambre ayant une grande section transversale d'écoulement, une zone sans écoulement, qui sert de chambre de rassemblement (21) du liquide léger, et qui comporte la sortie (6) de ce liquide léger, étant prévue sur la face de la surface directrice, opposée à l'écoulement des liquides, caractérisé par le fait que la chambre de rassemblement (21) du liquide léger présente une section transversale, qui est notablement réduite par rapport à la seconde chambre de dépôt (2), est adaptée pour l'établissement d'une colonne mince de liquide, se rétrécit vers le haut, et, à l'extrémité supérieure, aboutit à la sortie (6) du liquide léger, constitué par un tube montant, que la surface directrice (tube d'entrée 3, bac 24, organes directeurs 72', 73'), qui limite la chambre de rassemblement du liquide léger, aboutit jusqu'en-dessous du niveau bas du liquide léger, qui s'établit en tenant compte des fluctuations maximales du liquide lourd, et que la sortie du liquide lourd est constituée par une paroi plongeante (8, 33'), présentant un écartement horizontal important avec la première chambre de dépôt (1).

2. Dispositif selon la revendication 1, caractérisé par le fait que la surface directrice est formée par un tube (3) d'entrée des liquides, qui va en s'élargissant vers le bas de façon conique.

3. Dispositif selon la revendication 2, caractérisé par le fait que la cloison séparatrice est formée par une cloche de dépôt (12), dans laquelle le tube (3) d'entrée des liquides est introduit par le haut.

4. Dispositif selon la revendication 1, caractérisé par le fait que la surface directrice est formée par un bassin (24), en forme de bac, qui est pourvu de doubles parois latérales, est disposé à l'entrée des liquides, et forme, en conjonction avec la cloison séparatrice (30), la section transversale réduite d'écoulement.

5. Dispositif selon la revendication 1, caractérisé par le fait que la surface directrice est formée par deux organes directeurs (72', 73') qui descendent obliquement et sont disposés à l'entrée des liquides.

6. Dispositif selon la revendication 1, caractérisé par le fait que la paroi plongeante est constituée par un tube plongeur (8, 33').

7. Dispositif selon la revendication 4, caractérisé par le fait que les doubles parois latérales du bassin (24), en forme de bac, forment un sas à quatre côtés, et que la chambre de rassemblement (21) du liquide léger est prévue dans l'espace pyramidal, à quatre faces, compris entre lesdites parois latérales.

8. Dispositif selon la revendication 1, caractérisé par le fait que, entre la première chambre de dépôt (1) et la seconde chambre de dépôt (2) est prévu un puits (31, 70', 70") de cloison séparatrice.

9. Dispositif selon la revendication 1, caractérisé par le fait que le fond (34, 71) de la seconde chambre de dépôt (2) est réalisé avec une forte inclinaison en direction de la sortie du liquide lourd.

10. Dispositif selon la revendication 3, caractérisé par le fait que la cloche de dépôt (12) est pourvue, sur son bord inférieur, d'une gouttière (12') pour l'huile.

11. Dispositif selon l'une des revendications précédentes, caractérisé en ce qu'il comporte une troisième chambre de dépôt (séparateur du résidu 7), qui communique avec la sortie du liquide lourd, et que, pour faire sortir le liquide lourd de la troisième chambre de dépôt, un tube plongeur (9) est introduit dans la chambre de dépôt.

12. Dispositif selon l'une des revendications précédentes, caractérisé par le fait que la chambre de rassemblement du liquide léger présente une sortie de sécurité (6₃).

13. Dispositif selon la revendication 1, caractérisé par le fait que la sortie du liquide lourd présente une section transversale rectangulaire d'écoulement.

14. Dispositif selon la revendication 1, caractérisé par le fait que, en amont de la sortie (36) du liquide lourd, un bassin collecteur d'équilibrage (36') est formé par un dispositif à sas (27), la section transversale, large, de débordement, à travers le sas, donnant une section transversale ronde, d'écoulement, située plus bas, que l'arrivée au sas a lieu par un puits ou un tube rectangulaire, et que le sas est pourvu, pour augmenter la vitesse, d'un rebord rond de débordement.

15. Dispositif selon la revendication 1, caractérisé par le fait qu'une cloison de séparation des boues (17) est disposée en amont de la paroi plongeante de la sortie du liquide lourd.

Fig. 1

0 037 886

Fig. 2

0 037 886

Schnitt B-B

Fig.3

0 037 886

Schnitt A-A

Fig. 4

0 037 886

Fig. 5

Fig. 6

Schnitt **B-B**

Fig. 7

Schnitt A-A

Fig. 8

Fig. 9

Fig. 10